# EUROPÄISCHE PATENTSCHRIFT

(11) **EP 2 217 467 B1**
(45) Veröffentlichungstag und Bekanntmachung des Hinweises auf die Patenterteilung: **19.08.2015**
(21) Anmeldenummer: 08857470.2
(22) Anmeldetag: 27.11.2008
(51) Int. Cl.: B60N 2/12, B60N 2/30

(54) **KRAFTFAHRZEUGSITZ**
MOTOR VEHICLE SEAT
SIÈGE DE VÉHICULE AUTOMOBILE

(30) Priorität: 05.12.2007 DE 102007063565; 14.12.2007 DE 102007060934; 28.01.2008 DE 102008006425
(43) Veröffentlichungstag der Anmeldung: 18.08.2010
(73) Patentinhaber: Magna Seating (Germany) GmbH, 63877 Sailauf (DE)
(72) Erfinder: HOGE, Ralf, 42477 Radevormwald (DE); SKRABALA, Johann, 97080 Würzburg (DE); EL BENAYE, Karim, 63768 Hösbach (DE); NG, Lip Min, 51381 Leverkusen (DE); COOPER, Matthew, 63801 Kleinostheim (DE)
(74) Vertreter: Völger, Silke Beatrix
(86) Internationale Anmeldenummer: PCT/DE2008/001969
(87) Internationale Veröffentlichungsnummer: WO 2009/071055

(56) Entgegenhaltungen:
- WO-A1-98/54024
- WO-A1-2006/017933
- US-A1- 2002 027 383

## Beschreibung

Die vorliegende Erfindung betrifft eine zusammenlegbare Sitzanordnung für ein Kraftfahrzeug und insbesondere für einen Kleinbus oder Kastenwagen.

In Kombinations-Kraftfahrzeugen, Kleinbussen oder Kastenwagen ist die zweite Sitzreihe häufig zusammenlegbar ausgestaltet. Dadurch wird eine einfache Vergrößerung des Gepäckraums ohne Ausbau der Sitzreihe möglich. Eine derartige Sitzanordnung zeigt beispielsweise die Druckschrift US 2002 / 0027383 A1. In der Regel wird beim Zusammenlegen der Sitzreihe die Rückenlehne über die Sitzfläche abgelegt und der gesamte Sitz anschließend über eine Schwenkachse im vorderen Bereich der Sitzbasis nach vorne aufgestellt. Beim Zusammenlegen auf diese Art entsteht allerdings ein Absatz in dem erweiterten Gepäckraum, wodurch der in Längsrichtung des Fahrzeugs nutzbare Abschnitt des Gepäckraumbodens erheblich verkürzt ist. Zudem ist es erforderlich, die Sitze der ersten Sitzreihe durch eine zusätzliche Gepäckraumabtrennung gegen umher geschleudertes Ladegut zu schützen.

Aus der DE 10 2005 002 916 A1 ist eine Sitzanordnung bekannt, bei der der Fahrzeugsitz über seine Bodenabstützung längs des Fahrzeugbodens verschiebbar und in beliebigen Positionen arretierbar gehalten ist. Der Sitz ist aus einer Gebrauchsposition in eine Ablageposition verlagerbar, in der die Rückenlehne und die Sitzfläche eine gemeinsame senkrechte Ebene bilden. Die Ausbildung einer derartigen vertikalen Fahrzeugraumtrennung benötigt wenig Platz in der Fahrzeuglängsrichtung, allerdings ist eine freie Sicht nach hinten durch die Heckscheibe nicht mehr möglich.

Des Weiteren sind vorverlagerbare Sitzanordnungen bekannt, bei denen zur Erleichterung des Einstiegs in eine hintere Sitzreihe die Rückenlehne nach vorne geklappt wird. Bei sehr beengten Platzverhältnissen ist zusätzlich noch eine Vorwärtsbewegung der Sitzanordnung längs der Bodenschienen vorgesehen. Derartige Sitzanordnungen sind beispielsweise aus der US 6,799,800 B2, und WO 2006/017933 bekannt.

Eine gattungsgemässe zusammenlegbare Sitzanordnung ist aus dem Dokument WO-A-98/54024 bekannt.

Es ist daher eine Aufgabe der vorliegenden Erfindung, eine zusammenlegbare Sitzanordnung zu schaffen, die eine verbesserte Funktionsvielfalt aufweist, und die in zusammengelegter Einstellung (Verstaueinstellung) möglichst wenig Platz im unteren Bereich des erweiterten Gepäckraums beansprucht, jedoch weiterhin eine freie Sicht durch die Heckscheibe zulässt.

Diese Aufgabe löst die vorliegende Erfindung durch eine zusammenlegbare Sitzanordnung mit den Merkmalen des Anspruchs 1.

In einer bevorzugten Ausbildung der Sitzanordnung sind Mittel zur Kopplung der Verschiebebewegung zwischen der ersten Tragstruktur und dem Fahrzeugkörper mit der Verschwenkbewegung zwischen dem Sitzkissen und der Rückenlehne vorgesehen. Dadurch entfällt für den Benutzer das Erfordernis, das Sitzkissen beim Zusammenlegen der Sitzanordnung manuell in eine vertikale Position verschwenken zu müssen.

Noch weitere vorteilhafte Ausgestaltungen der vorliegenden Erfindung sind in den jeweiligen Unteransprüchen angegeben.

Bevorzugte Ausführungsformen der vorliegenden Erfindung werden nachfolgend beispielshalber beschrieben, wobei auf die anhängenden Zeichnungen Bezug genommen wird. Darin zeigen:
- Fig. 1: eine perspektivische schematische Seitenansicht von einer zusammenlegbaren Sitzanordnung gemäß der vorliegenden Erfindung in Gebrauchseinstellung;
- Fig. 2: eine perspektivische schematische Seitenansicht von der zusammenlegbaren Sitzanordnung gemäß Fig. 1 in der Verstaueinstellung;
- Fig. 3: eine perspektivische schematische Seitenansicht einer alternativen Ausführungsform von einer zusammenlegbaren Sitzanordnung gemäß der vorliegenden Erfindung in Gebrauchseinstellung;
- Fig. 4: eine perspektivische schematische Seitenansicht der alternativen Ausführungsform von der zusammenlegbaren Sitzanordnung gemäß Fig. 3 in der Verstaueinstellung;
- Fig. 5: eine perspektivische schematische Seitenansicht einer weiteren alternativen Ausführungsform von einer zusammenlegbaren Sitzanordnung gemäß der vorliegenden Erfindung in Gebrauchseinstellung;
- Fig. 6: eine perspektivische schematische Seitenansicht der weiteren alternativen Ausführungsform von der zusammenlegbaren Sitzanordnung gemäß Fig. 5 in einer Zwischeneinstellung;
- Fig. 7: eine perspektivische schematische Seitenansicht der weiteren alternativen Ausführungsform von der zusammenlegbaren Sitzanordnung gemäß Fig. 5 in der Verstaueinstellung;
- Fig. 8: eine perspektivische schematische Seitenansicht von zusammenlegbaren Sitzanordnungen der zweiten und dritten Sitzreihe gemäß der vorliegenden Erfindung in Verstaueinstellung beider Sitzanordnungen; und
- Fig. 9: eine perspektivische schematische Seitenansicht von den zusammenlegbaren Sitzanordnung gemäß Fig. 8 in einer zusammen geschobenen Position beider Sitzanordnungen.

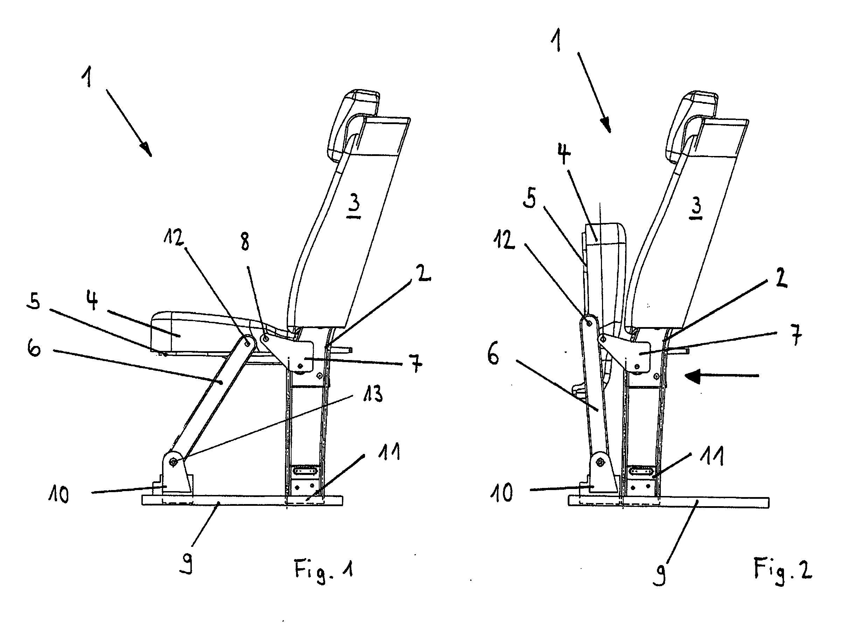

Die Fig. 1 und 2 zeigen eine zusammenlegbare Sitzanordnung 1 in verschiedenen Einstellungen. Die zusammenlegbare Sitzanordnung 1 umfasst eine erste Tragstruktur 2 mit einer daran angeordneten Rückenlehne 3, ein Sitzkissen 4 mit einem Sitzpolster und einer zugeordneten zweiten Tragstruktur 5 sowie einer Bodenabstützung, die eine Stützstruktur 6 umfasst.

Die dem Sitzkissen 4 zugeordnete zweite Tragstruktur 5 erstreckt sich im Wesentlichen innerhalb des Sitzkissens 4 und verleiht diesem die für den Gebrauch erforderliche Stabilität. Die erste Tragstruktur 2 ist der Rückenlehne 3 zugeordnet, um das Rückenlehnenpolster zu tragen und mechanisch zu versteifen. Die zweite Tragstruktur 5 mit dem Sitzkissen 4 ist im hinteren Bereich an der Rückenlehne 3 verschwenkbar angeschlagen. Diese verschwenkbare Verbindung 8 besteht in der gezeigten Ausführungsform insbesondere zwischen einer im hinteren Bereich oder im mittleren Bereich liegenden Stelle der vorstehend beschriebenen zweiten Tragstruktur 5 und an mit der ersten Tragstruktur 2 verbundenen Seitenwangen 7. Die Seitenwangen 7 sind als plattenförmige Elemente ausgestaltet, die seitlich an der ersten Tragstruktur 2 befestigt sind. Die erste Tragstruktur 2 setzt sich über die Rückenlehne 3 nach unten hin fort und besteht im Wesentlichen aus in Querrichtung beabstandet angeordneten, parallel verlaufenden Stützstreben, die sich in der Ebene der Rückenlehne 3 erstrecken. Am unteren Endbereich sind die Stützstreben mit Gleit- oder Führungselementen 11 verbunden, die längsverschieblich in den Führungsschienen 9 gelagert sind. Über nicht.dargestellte Verriegelungsmittel sind die Gleit- oder Führungselementen 11 in den Führungsschienen 9 arretierbar.

Die Stützstruktur 6 besteht aus zwei in Querrichtung beabstandet angeordneter, parallel zueinander verlaufender Stützstreben. Die Stützstreben sind an ihrem ersten Endbereich über eine Gelenkanordnung 12 an der zweiten Tragstruktur 5 verschwenkbar angelenkt. Diese verschwenkbare Verbindung ist in der gezeigten Ausführungsform insbesondere im Bereich vor der schwenkbaren Verbindung 8 zwischen Sitzkissen und Rückenlehne an der zweiten Tragstruktur 5 und dem ersten Endbereich der Stützstrebe 6 angeordnet. Der zweite Endbereich der Stützstreben der Stützstruktur 6 ist über eine Gelenkanordnung 13 verschwenkbar an Gleit- oder Führungselementen 10 angelenkt. Die Gleit- oder Führungselemente 10 sind in den Führungsschienen 9 gleitend geführt und über Verriegelungsmittel in beliebigen Positionen längs der Führungsschienen 9 arretierbar.

In der in der Figur 1 gezeigten Gebrauchseinstellung sind die parallel zueinander verlaufenden Stützstreben ausgehend von einem in etwa mittleren bis hinteren Seitenbereich des Sitzkissens diagonal nach unten in Fahrtrichtung weisend ausgerichtet.

Eine Überführung der Sitzanordnung 1 von der Gebrauchseinstellung in die in Figur 2 gezeigte Verstaueinstellung lässt sich wie folgt erreichen. Zunächst wird die Arretierung der der ersten Tragstruktur 2 zugeordneten Gleit- oder Führungselemente 11 im Bereich der Führungsschienen 9 gelöst. Die Stützstruktur 6 verbleibt weiterhin in der dargestellten Position über die Gleit- oder Führungselemente 10 in den Führungsschienen 9 arretiert. Anschließend wird die erste Tragstruktur 2 längs der Führungsschienen 9 in Fahrtrichtung nach vorne verschoben (Verschieberichtung durch Pfeil dargestellt).

Durch die Arretierung der Stützstruktur 6 in den Führungsschienen 9 wird beim Verschieben der ersten Tragstruktur 2 der Abstand der daran angeordneten Gleit- oder Führungselemente 11 zu den Gleit- oder Führungselementen 10 der Stützstruktur 6 reduziert. Die erste Tragstruktur 2 wird dabei bis in die in Fig.2 gezeigte Position verschoben, in der die Gleit- oder Führungselemente 11 zur Anlage an die Gleit- oder Führungselemente 10 gelangen. Beim Verschieben der ersten Tragstruktur 2 wird durch die zuvor beschriebene Anordnung der Stützstruktur 6 gleichzeitig ein zwangsgeführtes Hochschwenken des Sitzkissens 4 in eine vertikale Position bewirkt.

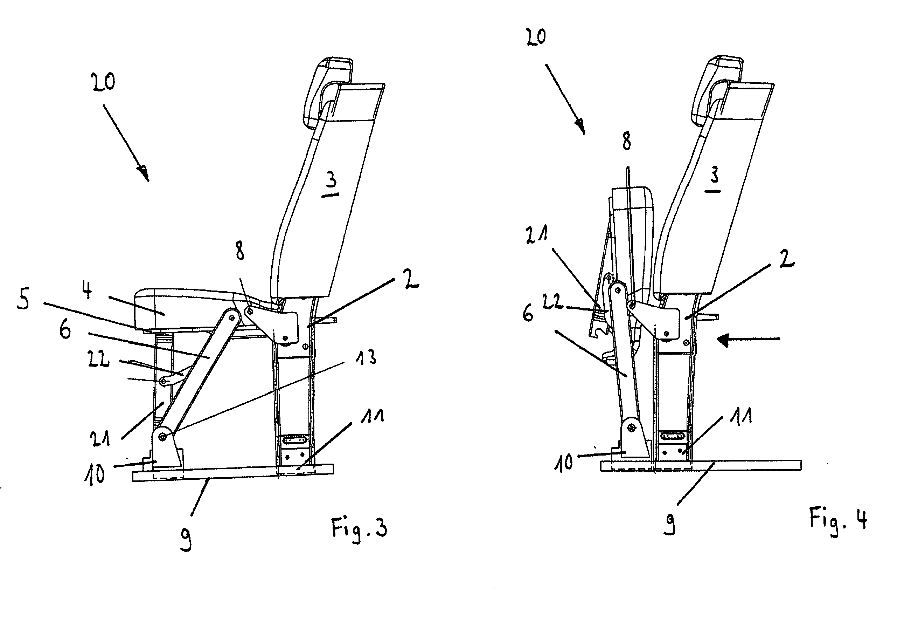

Die in den Figuren 3 und 4 gezeigte zusammenlegbare Sitzanordnung 20 in den verschiedenen Einstellungen unterscheidet sich von der zu den Figuren 1 und 2 beschriebenen Ausführungsform durch die Anordnung einer zweiten Stützstruktur 21, die eine Anzahl weiterer Stützstreben aufweist. Diese Anzahl weiterer Stützstreben ist vorzugsweise im vorderen unteren Bereich des Sitzkissens 4 an der zweiten Tragstruktur 5 angebunden, wobei die Stützstreben zweckmäßig in annähernd rechtem Winkel oder mit leichter Neigung dazu gegenüber der Ebene der Auflagefläche des Sitzpolsters ausgerichtet sind. Die weiteren Stützstreben dienen zur zusätzlichen Abstützung der zusammenlegbaren Sitzanordnung 20 an einem Fahrzeugkörper.

Hierzu sind die Stützstreben an ihrem ersten Endbereich quer zur Sitzrichtung, die vorliegend mit der Fahrzeuglängsrichtung zusammenfällt, verschwenkbar an der zweiten Tragstruktur angeschlagen. An ihrem zweiten Endbereich sind die Stützstreben lösbar mit den Gleit- oder Führungselementen 10 verbunden. Die lösbare Verbindung wird bei dem dargestellten Ausführungsbeispiel durch endseitig an den Stützstreben angeordneten Rasthaken, die einen im Gleit- oder Führungselement 10 angeordneten Bolzen umgreifen, bewirkt.

Ein zwangsgeführtes Hochschwenken der Stützstreben der zweiten Stützstruktur 21 in die in Figur 4 gezeigte vertikale Ausrichtung der Stützstreben, sowie Ausrasten des Rasthakens am Gleit- oder Führungselement 10 beim Überführen der Sitzanordnung 20 in die Verstaueinstellung und Einrasten des Rasthakens am Gleit- oder Führungselement 10 beim Zurückstellen der Sitzanordnung 20 in die Gebrauchseinstellung wird über ein Koppelelement 22 bewirkt. Hierfür ist das Koppelelement 22 als winkelig ausgeführter Hebel an seinem einen Ende im mittleren Bereich der Stützstrebe der zweiten Stützstruktur 21 und an seinem anderen Ende am oberen Bereich der Stützstruktur 6 verschwenkbar angeschlagen.

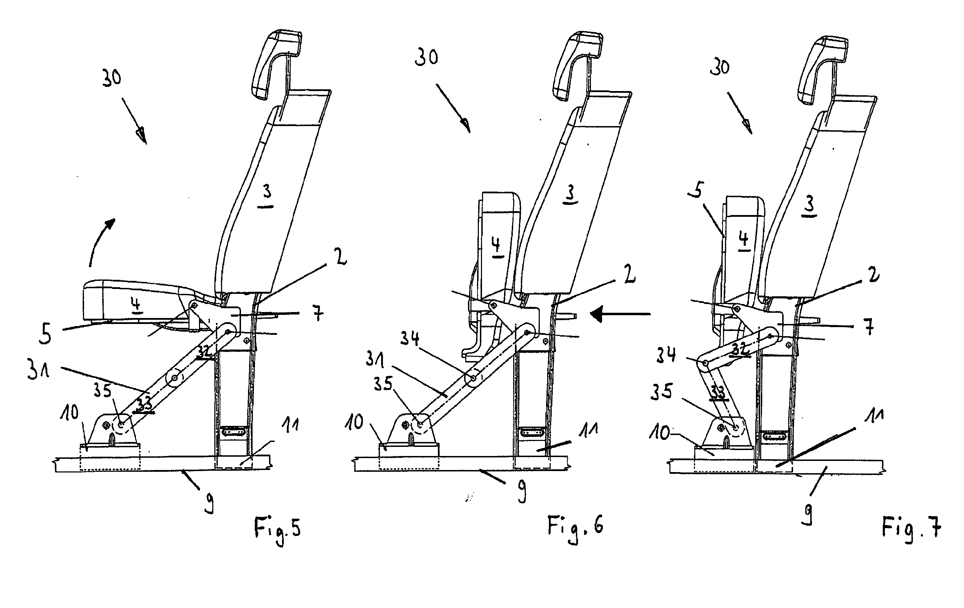

Bei der in den Figuren 5,6 und 7 gezeigten zusammenlegbaren Sitzanordnung 30 in den verschiedenen Einstellungen sind im Unterschied zu den zuvor beschriebenen Ausführungsformen keine Mittel vorgesehen, die eine Kopplung der Verschiebebewegung zwischen der ersten Tragstruktur und dem Fahrzeugkörper mit der Verschwenkbewegung zwischen dem Sitzkissen und der Rückenlehne bewirken.

Die zusammenlegbare Sitzanordnung 30 umfasst eine erste Tragstruktur 2 mit einer daran angeordneten Rückenlehne 3, ein Sitzkissen 4 mit einem Sitzpolster und einer zugeordneten zweiten Tragstruktur 5 sowie einer Bodenabstützung, die eine Stützstruktur 6 umfasst.

Die dem Sitzkissen 4 zugeordnete zweite Tragstruktur 5 erstreckt sich im Wesentlichen innerhalb des Sitzkissens 4 und verleiht diesem die für den Gebrauch erforderliche Stabilität. Die erste Tragstruktur 2 ist der Rückenlehne 3 zugeordnet, um das Rückenlehnenpolster zu tragen und mechanisch zu versteifen. Die zweite Tragstruktur 5 mit dem Sitzkissen 4 ist im hinteren Bereich an der Rückenlehne 3 verschwenkbar angeschlagen. Diese verschwenkbare Verbindung 8 besteht in der gezeigten Ausführungsform insbesondere zwischen einer im hinteren Bereich oder im mittleren Bereich liegenden Stelle der vorstehend beschriebenen zweiten Tragstruktur 5 und an mit der ersten Tragstruktur 2 verbundenen Seitenwangen 7. Die Seitenwangen 7 sind als plattenförmige Elemente ausgestaltet, die seitlich an der ersten Tragstruktur 2 befestigt sind. Die erste Tragstruktur 2 setzt sich über die Rückenlehne 3 nach unten hin fort und besteht im Wesentlichen aus in Querrichtung beabstandet angeordneten, parallel verlaufenden Stützstreben, die sich in der Ebene der Rückenlehne 3 erstrecken. Am unteren Endbereich sind die Stützstreben mit Gleit- oder Führungselementen 11 verbunden, die längsverschieblich in den Führungsschienen 9 gelagert sind.

Des Weiteren ist eine Stützstruktur 31 vorgesehen, die aus zwei parallel zueinander angeordneter Kniegelenkanordnungen besteht. Die Kniegelenkanordnung umfasst zwei Gelenkhebel 32,33, die an ihren einander zugewandten Endbereichen über ein Gelenk 34 verschwenkbar miteinander verbunden sind. Der andere Endbereich des ersten Hebels 32 ist verschwenkbar an der mit der ersten Tragstruktur 2 verbundenen Seitenwange 7 angeschlagen. Der zweite Hebel 33 ist mit seinem anderen Endbereich über eine Gelenkanordnung 35 verschwenkbar an dem Gleit- oder Führungselement 10 angeschlagen.

In der in der Figur 5 gezeigten Gebrauchseinstellung bilden die beiden Gelenkhebel 32,33 eine diagonal nach unten in Fahrtrichtung weisende Stützstrebe. Das Sitzkissen 4 ist horizontal ausgerichtet.

Eine Überführung der Sitzanordnung 30 von der Gebrauchseinstellung in die in Figur 7 gezeigten Verstaueinstellung lässt sich nun in einem ersten Schritt durch ein manuelles Hochschwenken des Sitzkissens 4 in die in Figur 6 gezeigte vertikalen Ausrichtung des Sitzkissens 4 erreichen. Anschließend wird die Arretierung der Gleit- oder Führungselemente 11 der ersten Tragstruktur 2 in den Führungsschienen 9 gelöst und die Sitzanordnung 30 wird, wie es durch den Pfeil dargestellt ist in den Führungsschienen 9 verschoben.

Durch die Arretierung der Gleit- oder Führungselemente 10 in den Führungsschienen 9 wird beim Verschieben der ersten Tragstruktur 2 und der daran angeordneten Gleit- oder Führungselemente 11 der Abstand der Gleit- oder Führungselemente 11 der ersten Tragstruktur zu den Gleit- oder Führungselemente 10 der Stützstruktur 31 reduziert. Die erste Tragstruktur 2 wird bis in die in Fig.7 gezeigte Position verschoben, in der die Gleit- oder Führungselemente 11 der ersten Tragstruktur 2 zur Anlage an die Gleit- oder Führungselemente 10 der Stützstruktur gelangen. Beim Verschieben der ersten Tragstruktur 2 wird durch die zuvor beschriebene Anordnung und Ausgestaltung der Kniehebelanordnung ein Verschwenken der beiden Hebel 32,33 in eine abgewinkelte Anordnung erreicht.

Vorzugsweise werden die Tragstrukturen und die Stützstrukturen der vorstehend beschrieben zusammenlegbaren Sitzanordnung in der Art eines Gestells oder Rahmenwerks ausgebildet sein. Die Möglichkeit einer günstigen Herstellung ergibt sich bei der Verwendung von geeignet gebogenen Metallrohren, die über Muffen oder Schweißstellen untereinander und mit anhängenden Beschlagteilen, insbesondere Gelenken und Schlössern verbunden sind.

Als Polster für die vorstehend beschriebene zusammenlegbare Sitzanordnung wird üblicherweise ein Kern aus einem geschäumten elastischen Kunststoffmaterial, wie beispielsweise Polyurethan, vorgesehen, der mit einem strapazierfähigen Bezug aus Stoffmaterial, Kunst- oder Naturleder versehen ist.

Vorzugsweise werden für eine zusammenlegbare Sitzanordnung mit einem einzelnen Sitzplatz im hinteren und vorderen Endbereich am Sitzkissen jeweils zwei randständige Stützstreben am Sitzkissen vorgesehen sein. Bei einer zusammenlegbaren Sitzanordnung mit mehreren Sitzplätzen werden vorzugsweise weitere, parallel verlaufende zwischen liegende Stützstreben vorgesehen sein, um eine Durchbiegung des Sitzkissens zu vermeiden.

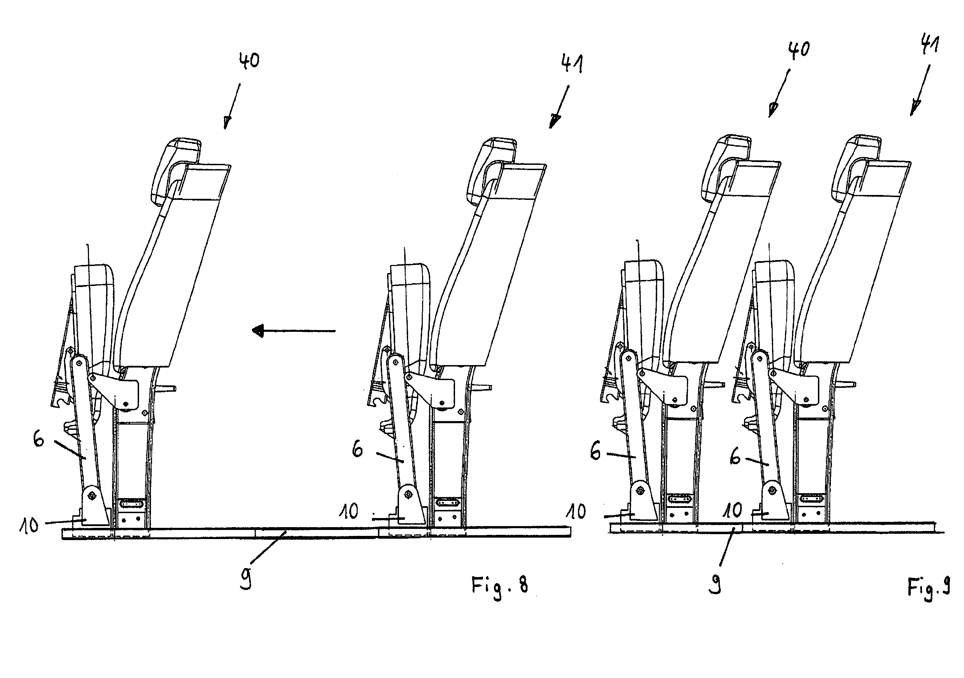

Figur 8 zeigt in perspektivischer Darstellung eine Sitzanordnung 40 der zweiten Sitzreihe in Verstaueinstellung und eine dahinter angeordnete Sitzanordnung 41 der dritten Sitzreihe in Verstaueinstellung. Zur Vergrößerung des Gepäckraums wird die Arretierung der Gleit-oder Führungselemente 10 der Stützstruktur 6 in den Führungsschienen 9 gelöst und wie es durch den Pfeil dargestellt ist, die zusammengelegte Sitzanordnung 41 der dritten Sitzreihe längs der Schienenanordnung an die Rückseite der Rückenlehne 3 der Sitzanordnung 40 der zweiten Sitzreihe verschoben.

Die zusammenfaltbare Sitzanordnung kann derart ausgebildet sein, dass sie eine Tragstruktur und Stützstruktur aufweist, mit paarweise in Längsrichtung hintereinander liegenden Gleit- oder Führungselemente 10,11, an denen aufhebbare Verriegelungsmittel zur lösbaren und/oder entnehmbaren Festlegung in Führungsschienen 9 am Boden des Kraftfahrzeuginnenraums angeordnet sind. Die Tragstruktur und Stützstruktur sind zum Verstauen in Längsrichtung unter paarweiser Annäherung der Gleit- oder Führungselemente 10,11 zusammenfaltbar, wobei die Verriegelungsmittel dazu eingerichtet sind, bei der Annäherung paarweise zusammenzuwirken, um durch die Bewegung eines entriegelten Verriegelungsmittels die Verriegelung des zugeordneten Verriegelungsmittels aufzuheben.

## Patentansprüche

1. Zusammenlegbare Sitzanordnung für ein Kraftfahrzeug, aufweisend eine erste Tragstruktur (2) mit einer daran angeordneten Rückenlehne (3) und verriegelbaren Gleit- oder Führungselementen (11) zur lösbaren und/oder entnehmbaren Festlegung in Führungsschienen (9) am Boden des Kraftfahrzeuginnenraums, eine gegenüber der ersten Tragstruktur (2) verschwenkbar angeschlagene zweite Tragstruktur (5) mit einem Sitzkissen (4), und eine Stützstruktur (6;31), an der in einem ersten Endbereich Gleit- oder Führungselemente (10) zur lösbaren und/oder entnehmbaren Festlegung in Führungsschienen (9) vorgesehen sind, und die in einem zweiten Endbereich an einer Tragstruktur (2,5) gelenkig angeschlagen ist, um daraus Kräfte aufgrund einer Belastung des Sitzkissens (4) in die Führungsschiene (9) abzuleiten, **dadurch gekennzeichnet, dass** die Gleit-oder Führungselemente (11) an der ersten Tragstruktur (2) und der Stützstruktur (6;31) relativ zueinander unter Verschwenken der Stützstruktur (6;31) bewegbar sind.

2. Zusammenlegbare Sitzanordnung für ein Kraftfahrzeug nach Anspruch 1, wobei die Stützstruktur (6) an der zweiten Tragstruktur (5) verschwenkbar angeschlagen ist, um beim Verringern des Abstandes der Gleit- oder Führungselemente (10,11) ein Verschwenken der zweiten Tragstruktur (6) zu bewirken, und wobei insbesondere die Stützstruktur (31) an der ersten Tragstruktur (2) verschwenkbar angeschlagen ist, und wobei vorzugsweise die Stützstruktur (31) zusammenfaltbar oder zusammenschiebbar ausgebildet ist.

3. Zusammenlegbare Sitzanordnung für ein Kraftfahrzeug nach einem der vorgehenden Ansprüche, wobei eine zweite Stützstruktur (21) vorgesehen ist, die in einem ersten Endbereich an der zweiten Tragstruktur (5) verschwenkbar angeschlagen ist, und in einem zweiten Endbereich lösbar an den Gleit- oder Führungselementen (10) der Stützstruktur (6) festgelegt ist.

4. Zusammenlegbare Sitzanordnung für ein Kraftfahrzeug nach Anspruch 3, wobei ein Koppelelement (22) vorgesehen ist, das in einem ersten Endbereich an der zweiten Stützstruktur (21) verschwenkbar angeschlagen ist, und in einem zweiten Endbereich an der Stützstruktur (6) verschwenkbar gelagert ist, um beim Verringern des Abstandes der Gleit- oder Führungselemente (10,11) ein Lösen an den Gleit- oder Führungselementen (10) und Verschwenken der zweiten Stützstruktur (21) zu bewirken.

5. Zusammenlegbare Sitzanordnung für Kraftfahrzeuge nach einem oder mehreren der vorstehenden Ansprüche, wobei das Sitzkissen (4) auf der Tragstruktur (5) aufliegt und gegenüber der ersten Tragstruktur (2) verschwenkbar angeschlagen ist, und wobei weiterhin eine Verriegelungsvorrichtung vorgesehen ist, zur lösbaren Festlegung des Sitzkissens an der ersten Tragstruktur (2) in der Verstaueinstellung und eine Entriegelungsvorrichtung, die mit der Verriegelungsvorrichtung (62,63) derart zusammenwirkt, dass erst nach dem Festlegen der Gleit- oder Führungselementen (11) die Verriegelung des Sitzkissens (4) freigegeben wird, und wobei die Verriegelungsvorrichtung vorzugsweise einen an dem Sitzkissen (4) angeordneten Verriegelungsbolzen (62) umfasst, der in eine Schlossaufnahme eines an der ersten Tragstruktur (2) angeordneten Schlosses (63) eingreift.

6. Zusammenlegbare Sitzanordnung nach einem der vorangehenden Ansprüche, wobei am Sitzkissen (4) ein weiterer Verriegelungsbolzen (62) angeordnet ist, der in der Verstaueinstellung in einem an der ersten Tragstruktur (2) angeordneten Klemmelement gehalten wird.

7. Zusammenlegbare Sitzanordnung nach einem der vorangehenden Ansprüche, wobei die durch die Verbindungsteile (72, 9, 14, 15; 72, 9, 83, 84) vermittelten Anbindungen durch Benutzermaßnahmen aufhebbar sind zur Entnahme der Sitzanordnung, und wobei insbesondere die Verbindung zwischen dem ersten Verbindungsteil (72) und dem zugeordneten fahrzeugbodenseitigen Verbindungsteil (9) durch eine Drehsperre (73) gegenüber dem vorgesehenen Verschwenken blockierbar ist.

8. Zusammenlegbare Sitzanordnung nach einem der vorangehenden Ansprüche, wobei die zweite Tragstruktur (5) gegenüber der ersten Tragstruktur (2) in der Gebrauchsstellung durch ein Verriegelungsmittel (14) festlegbar ist, und wobei vorzugsweise Mittel vorgesehen sind zum Aufheben der Verriegelungsmittel (14) bei einer Aufhebung der Drehsperre (73) oder umgekehrt.

9. Zusammenlegbare Sitzanordnung nach einem der vorangehenden Ansprüche, wobei durch ein Federmittel (18) die zweite Tragstruktur (5) zur verstauten Lage vorgespannt ist, und wobei vorzugsweise das Federmittel (18) zur Vorspannung der zweiten Tragstruktur (5) einen linearen Energiespeicher umfasst, der mit seinem ersten Endbereich an der ersten Tragstruktur (2) gelenkig angeschlagen ist und mit seinem zweiten Endbereich an der Stützstruktur (71, 81) oder der zweiten Tragstruktur (5) gelenkig angeschlagen ist.

## Claims

1. Folding seat arrangement for a motor vehicle, having a first carrying structure (2) with a backrest (3) arranged thereon and lockable sliding or guide elements (11) for the releasable and/or removable securing in guide rails (9) on the floor of the motor vehicle interior, a second carrying structure (5) which is fastened pivotably in relation to the first carrying structure (2) and has a seat cushion (4), and a supporting structure (6; 31) on which sliding or guide elements (10) for the releasable and/or removable securing in guide rails (9) are provided in a first end region and which is fastened in an articulated manner in a second end region to a carrying structure (2; 5) in order to divert forces therefrom due to loading of the seat cushion (4) into the guide rail (9), **characterized in that** the sliding or guide elements (11) on the first carrying structure (2) and on the supporting structure (6; 31) are movable relative to one another by pivoting of the supporting structure (6; 31).

2. Folding seat arrangement for a motor vehicle according to Claim 1, wherein the supporting structure (6) is fastened pivotably to the second carrying structure (5) in order to cause the second carrying structure (6) to pivot when the distance between the sliding or guide elements (10, 11) is reduced, and wherein in particular the supporting structure (31) is fastened pivotably to the first carrying structure (2), and wherein preferably the supporting structure (31) is designed in a manner such that it can be folded up or pushed together.

3. Folding seat arrangement for a motor vehicle according to either of the preceding claims, wherein a second supporting structure (21) is provided, said supporting structure being fastened pivotably in a first end region to the second carrying structure (5) and being secured releasably in a second end region to the sliding or guide elements (10) of the supporting structure (6).

4. Folding seat arrangement for a motor vehicle according to Claim 3, wherein a coupling element (22) is provided, said coupling element being fastened pivotably in a first end region to the second supporting structure (21) and being mounted pivotably in a second end region on the supporting structure (6) in order to bring about release at the sliding or guide elements (10) and pivoting of the second supporting structure (21) when the distance between the sliding or guide elements (10, 11) is reduced.

5. Folding seat arrangement for motor vehicles according to one or more of the preceding claims, wherein the seat cushion (4) rests on the carrying structure (5) and is fastened pivotably in relation to the first carrying structure (2), and wherein a locking device is furthermore provided, for the releasable securing of the seat cushion on the first carrying structure (2) in the storage setting, and an unlocking device is provided which interacts with the locking device (62, 63) in such a manner that the locking of the seat cushion (4) is released only after the sliding or guide elements (11) are secured, and wherein the locking device preferably comprises a locking bolt (62) which is arranged on the seat cushion (4) and engages in a lock receptacle of a lock (63) arranged on the first carrying structure (2).

6. Folding seat arrangement according to one of the preceding claims, wherein a further locking bolt (62) is arranged on the seat cushion (4), said locking bolt, in the storage setting, being held in a clamping element arranged on the first carrying structure (2).

7. Folding seat arrangement according to one of the preceding claims, wherein the connections made by the connecting parts (72, 9, 14, 15; 72, 9, 83, 84) can be undone by user measures in order to remove the seat arrangement, and wherein in particular the connection between the first connecting part (72) and the associated connecting part (9) on the vehicle floor can be blocked by a rotary catch (73) in relation to the designated pivoting.

8. Folding seat arrangement according to one of the preceding claims, wherein the second carrying structure (5) can be secured in relation to the first carrying structure (2) in the use position by means of a locking means (14), and wherein preferably means are provided to undo the locking means (14) when the rotary catch (73) is undone, or vice versa.

9. Folding seat arrangement according to one of the preceding claims, wherein the second carrying structure (5) is prestressed by a spring means (18) to provide the stored position, and wherein preferably, in order to prestress the second carrying structure (5), the spring means (18) comprises a linear energy accumulator which is fastened in an articulated manner by the first end region thereof to the first carrying structure (2) and is fastened in an articulated manner by the second end region thereof to the supporting structure (71, 81) or to the second carrying structure (5).

## Revendications

1. Ensemble de siège pliant pour un véhicule automobile, comprenant une première structure porteuse (2) sur laquelle est disposé un dossier (3) et des éléments de glissement ou de guidage (11) pour la fixation libérable et/ou amovible dans des rails de guidage (9) sur le plancher de l'habitacle du véhicule automobile, une deuxième structure porteuse (5) attachée de manière pivotante par rapport à la première structure porteuse (2) et pourvue d'un coussin de siège (4), et une structure de support (6 ; 31), sur laquelle des éléments de glissement ou de guidage (10) pour la fixation libérable et/ou amovible dans des rails de guidage (9) sont prévus dans une première région d'extrémité, et laquelle structure de support est attachée de manière articulée à une structure porteuse (2 ; 5) dans une deuxième région d'extrémité, afin de détourner de celle-ci des forces résultant d'une sollicitation du coussin de siège (4) dans le rail de guidage (9), **caractérisé en ce que** les éléments de glissement ou de guidage (11) sur la première structure porteuse (2) et sur la structure de support (6 ; 31) sont déplaçables les uns par rapport aux autres par pivotement de la structure de support (6 ; 31).

2. Ensemble de siège pliant pour un véhicule automobile selon la revendication 1, dans lequel la structure de support (6) est attachée de manière pivotante à la deuxième structure porteuse (5), afin de provoquer un pivotement de la deuxième structure porteuse (6) lors de la réduction de l'écartement des éléments de glissement ou de guidage (10, 11), et dans lequel la structure de support (31) est en particulier attachée de manière pivotante à la première structure porteuse (2), et dans lequel la structure de support (31) est de préférence réalisée de manière repliable ou télescopique.

3. Ensemble de siège pliant pour un véhicule automobile selon l'une quelconque des revendications précédentes, dans lequel une deuxième structure de support (21) est prévue, laquelle est attachée de manière pivotante à la deuxième structure porteuse (5) dans une première région d'extrémité, et est fixée de manière libérable aux éléments de glissement ou de guidage (10) de la structure de support (6) dans une deuxième région d'extrémité.

4. Ensemble de siège pliant pour un véhicule automobile selon la revendication 3, dans lequel un élément d'accouplement (22) est prévu, lequel est attaché de manière pivotante à la deuxième structure de support (21) dans une première région d'extrémité, et est monté de manière pivotante sur la structure de support (6) dans une deuxième région d'extrémité, afin de provoquer une libération au niveau des éléments de glissement ou de guidage (10) et un pivotement de la deuxième structure de support (21) lors de la réduction de l'écartement des éléments de glissement ou de guidage (10, 11).

5. Ensemble de siège pliant pour véhicules automobiles selon l'une quelconque ou plusieurs des revendications précédentes, dans lequel le coussin de siège (4) repose sur la structure porteuse (5) et est attaché de manière pivotante par rapport à la première structure porteuse (2), et dans lequel un dispositif de verrouillage est en outre prévu pour la fixation libérable du coussin de siège à la première structure porteuse (2) dans le réglage de rangement, et un dispositif de déverrouillage est prévu, lequel coopère avec le dispositif de verrouillage (62, 63) de telle sorte que le verrouillage du coussin de siège (4) ne soit libéré qu'après la fixation des éléments de glissement ou de guidage (11), et dans lequel le dispositif de verrouillage comporte de préférence une goupille de verrouillage (62) disposée sur le coussin de siège (4), laquelle vient en prise dans un logement de verrou d'un verrou (63) disposé sur la première structure porteuse (2).

6. Ensemble de siège pliant selon l'une quelconque des revendications précédentes, dans lequel une goupille de verrouillage supplémentaire (62) est disposée sur le coussin de siège (4), laquelle est maintenue dans un élément de serrage disposé sur la première structure porteuse (2) dans le réglage de rangement.

7. Ensemble de siège pliant selon l'une quelconque des revendications précédentes, dans lequel les liaisons transmises par les parties de liaison (72, 9, 14, 15 ; 72, 9, 83, 84) peuvent être supprimées par des actions d'un utilisateur pour retirer l'ensemble de siège, et dans lequel la liaison entre la première partie de liaison (72) et la partie de liaison (9) associée du côté du plancher du véhicule peut en particulier être bloquée par un moyen de blocage en rotation (73) vis-à-vis du pivotement prévu.

8. Ensemble de siège pliant selon l'une quelconque des revendications précédentes, dans lequel la deuxième structure porteuse (5) peut être fixée par rapport à la première structure porteuse (2) dans la position d'utilisation par un moyen de verrouillage (14), et dans lequel des moyens sont de préférence prévus pour supprimer les moyens de verrouillage (14) lors d'une suppression du moyen de blocage en rotation (73) ou inversement.

9. Ensemble de siège pliant selon l'une quelconque des revendications précédentes, dans lequel la deuxième structure porteuse (5) est précontrainte jusqu'à la position rangée par un moyen de ressort (18), et dans lequel le moyen de ressort (18) pour la précontrainte de la deuxième structure porteuse (5) comporte de préférence un accumulateur d'énergie linéaire qui est attaché de manière articulée à la première structure porteuse (2) par sa première région d'extrémité et est attaché de manière articulée à la structure de support (71, 81) ou à la deuxième structure porteuse (5) par sa deuxième région d'extrémité.
